# FASCICULE DE BREVET EUROPEEN

(11) **EP 1 862 874 B1**
(45) Date de publication et mention de la délivrance du brevet: **12.05.2010**
(21) Numéro de dépôt: 07108561.7
(22) Date de dépôt: 21.05.2007
(51) Int. Cl.: G04G 9/00, G04C 17/00, G09F 13/24, G02B 26/00

(54) **Dispositif d'affichage pour un instrument portable, tel qu'une montre**
Anzeigevorrichtung für ein tragbares Gerät, wie beispielsweise eine Uhr
Display unit for a portable instrument, such as a watch

(30) Priorité: 02.06.2006 EP 06114946
(43) Date de publication de la demande: 05.12.2007
(73) Titulaire: Montres Rado S.A., 2543 Lengnau b. Biel (CH)
(72) Inventeur: Furetta, Alessandra, 2540, Grenchen (CH)
(74) Mandataire: Ravenel, Thierry Gérard Louis

(56) Documents cités:
- WO-A-2004/068208
- US-A- 4 034 554
- US-A- 4 144 663
- US-A- 6 037 955
- LEA M: "ELECTROCAPILLARITY MODULATORS AND LARGE SCREEN PROJECTION DISPLAYS" PROCEEDINGS OF THE SPIE, SPIE, BELLINGHAM, VA, US, vol. 684, 21 août 1986 (1986-08-21), pages 45-49, XP000199517 ISSN: 0277-786X

## Description

La présente invention concerne un dispositif d'affichage pour un instrument portable, tel qu'une montre. Le dispositif d'affichage comprend au moins une première plaque transparente ou semi transparente disposée sur un élément inférieur, une cavité fermée étant formée au moins en partie dans la première plaque dans le champ de vision du dispositif pour l'affichage d'une information à travers la plaque.

La présente invention concerne également une montre qui comprend un tel dispositif d'affichage.

Habituellement, un dispositif d'affichage d'une information d'un instrument portable est constitué par une cellule à cristaux liquides. La cellule d'affichage comprend un substrat avant transparent ayant des premières électrodes transparentes sur une face intérieure, un substrat arrière transparent ayant au moins une seconde électrode transparente sur une face intérieure et un cadre de scellement des deux substrats pour définir un espace fermé entre les substrats. Une substance occupe l'espace fermé entre les premières et secondes électrodes. Les propriétés optiques ou physiques de la substance peuvent être modifiées entre les électrodes activées par une différence de potentiels appliqués par des moyens de commande. Par l'action des moyens de commande, la cellule d'affichage, qui dispose également de polariseurs, permet d'afficher une information, par exemple une heure ou une date.

Les électrodes de telles cellules à cristaux liquides doivent être alimentées électriquement en continu de manière à maintenir ou modifier l'affichage d'une information, ce qui peut constituer un inconvénient dans le cas où l'instrument portable est alimenté par une batterie ou un accumulateur de petite taille. De plus, la cellule à cristaux liquides ne permet pas de maintenir une information affichée en cas de changement de batterie.

Il est également connu d'afficher une information sur un dispositif d'affichage par un autre moyen que celui d'une cellule à cristaux liquides. Le document de brevet US 6,037,955 décrit justement un dispositif d'affichage microfluidique d'une image. Le dispositif comprend un écran à réseau de pixels constitués par des chambres ayant chacune une entrée et une sortie pour la circulation de deux colorants liquides de couleur différente provenant d'un réservoir de liquide. Les colorants transitent hors de chaque chambre dans des microcanaux jusqu'au réservoir de liquide au moyen de micropompes. En fonction du type de colorant occupant chaque chambre, une image peut être présentée sur l'écran. Cependant un tel dispositif d'affichage ne peut être adapté à équiper un instrument de petit volume, tel qu'une montre, et aucune précaution n'est prise pour maintenir le liquide dans chaque chambre pour l'affichage d'une information sans alimentation électrique, ce qui est un inconvénient.

La présente invention a pour but principal de fournir un dispositif d'affichage pour un instrument portable, tel qu'une montre, d'un nouveau genre afin de pallier les inconvénients des dispositifs de l'art antérieur décrits ci-devant.

A cet effet, la présente invention a pour objet un dispositif d'affichage cité ci-devant qui comprend les caractéristiques définies dans la revendication 1.

Des formes particulières avantageuses du dispositif d'affichage sont définies dans les revendications dépendantes 2 à 9.

Un avantage du dispositif d'affichage selon l'invention réside dans le fait qu'une cavité fermée est formée en partie dans une plaque transparente ou semi transparente disposée sur un élément inférieur afin d'être remplie ou vidée d'un fluide coloré par l'intermédiaire de moyens d'alimentation en fluide coloré pour l'affichage d'une information. Pour l'affichage d'une information du type à contraste négatif, le fluide coloré est retiré de la cavité si la couleur du dispositif d'affichage autour de la cavité est identique à la couleur du fluide coloré. Dans le cas contraire d'un affichage d'une information du type à contraste positif, la cavité fermée est remplie du fluide coloré.

Plusieurs cavités fermées sont formées au moins en partie dans la première plaque transparente ou semi transparente. Un canal par cavité est relié à travers l'élément inférieur par l'intermédiaire des moyens d'alimentation en fluide coloré à un réservoir de fluide coloré. Ces moyens d'alimentation comprennent par exemple au moins une micropompe reliée par un conduit d'entrée directement au réservoir de fluide coloré, et par un conduit de sortie commun à une microvalve par cavité directement reliée au canal respectif de la cavité correspondante.

Avantageusement, la micropompe et les microvalves sont commandées par des signaux électriques de moyens de commande pour remplir ou vider certaines cavités du fluide coloré. Dans le cas d'une montre, les moyens de commande sont cadencés par une base de temps d'un mouvement d'horlogerie électronique pour commander l'affichage d'une heure ou d'une date. Pour ce faire, les cavités sont configurées en digits formés chacun de 7 segments d'affichage.

Avantageusement, la première plaque est composée d'une plaque supérieure en verre ou en plastique transparente fixée sur une plaque intermédiaire en verre ou en plastique, qui peut être teintée en partie. Les cavités fermées sont formées en partie dans la plaque intermédiaire. Plusieurs pierres transparentes ou semi transparentes, telles que des pierres précieuses ou synthétiques, peuvent être intégrées dans la matière de la plaque intermédiaire. Ces pierres sont agencées également en digits directement en regard des digits formés par les cavités. En l'absence de fluide coloré dans les cavités, les pierres permettent de combiner l'information du dispositif avec la réfraction de lumière au travers des pierres et/ou la réflexion de lumière sur ou dans les pierres pour améliorer la qualité de l'affichage.

Les pierres précieuses peuvent être des rubis, des saphirs, des émeraudes, des pierres de lune, des diamants, ou d'autres pierres précieuses. Ces pierres peuvent être également des pierres synthétiques, telles que des pierres en oxyde de zirconium cubique monocristallin. De ce fait, plusieurs sortes de pierres de taille égale ou différente peuvent garnir le support afin de donner des couleurs différentes à travers l'information du dispositif et une diffraction ou reflet de la lumière particulier.

Avantageusement, un dispositif de rétro-éclairage peut être prévu pour illuminer certaines pierres transparentes ou semi transparentes visibles par transparence de certaines cavités non remplies du fluide coloré dans le champ de vision du dispositif d'affichage. La taille des pierres peut être optimisée pour laisser passer un maximum de lumière. Cette taille peut être d'un type brillant ou baguette ou d'autres types à plusieurs facettes.

Dans le cas où un support de pierres transparentes ou semi transparentes est fixé sur la plaque intermédiaire pour un affichage de préférence à contraste positif, certaines cavités sélectionnées sont remplies du fluide coloré, par exemple de couleur noire. Les parties autour de l'information affichée peuvent apparaître de couleur claire, par exemple blanche ou argentée afin de bien contraster avec l'information lue à travers les pierres du support à la lumière du jour ou avec l'aide du dispositif de rétro-éclairage.

A cet effet, la présente invention a pour objet également une montre qui comprend un dispositif d'affichage comme mentionné dans la revendication dépendante 10.

Des formes particulières avantageuses de la montre sont définies dans les revendications dépendantes 11 à 13.

Les buts, avantages et caractéristiques du dispositif d'affichage et de la montre le comprenant apparaîtront mieux dans la description suivante de formes d'exécution de l'invention non limitatives en liaison avec les dessins dans lesquels :
Les figures 1a à 1f représentent schématiquement différentes étapes d'affichage à l'aide du fluide coloré du dispositif d'affichage selon l'invention combiné avec une plaque ou un support transparent ou semi transparent à pierres précieuses,
les figures 2 et 3 représentent une vue en coupe diamétrale et une vue de dessus d'une première forme d'exécution d'un dispositif d'affichage selon l'invention équipant une montre à affichage numérique de l'heure,
les figures 4 et 5 représentent une vue en coupe diamétrale et une vue de dessus d'une seconde forme d'exécution d'un dispositif d'affichage selon l'invention comprenant une plaque intermédiaire ou un support transparent ou semi transparent à pierres précieuses équipant une montre à affichage de l'heure par des aiguilles, et
les figures 6 et 7 représentent une vue en coupe diamétrale et une vue de dessus d'une troisième forme d'exécution d'un dispositif d'affichage selon l'invention muni d'un support transparent ou semi transparent à pierres précieuses équipant une montre à affichage numérique de l'heure.

Dans la description suivante, il n'est fait référence qu'à un dispositif d'affichage équipant une montre, par exemple une montre-bracelet en tant qu'instrument portable. Toutes les parties conventionnelles du dispositif d'affichage, qui font partie des connaissances générales de l'homme du métier ne seront expliquées que sommairement dans la description suivante. Cependant, il est bien clair qu'un tel dispositif d'affichage peut équiper d'autres instruments portables, tels que des téléphones portables, des organiseurs électroniques ou d'autres instruments.

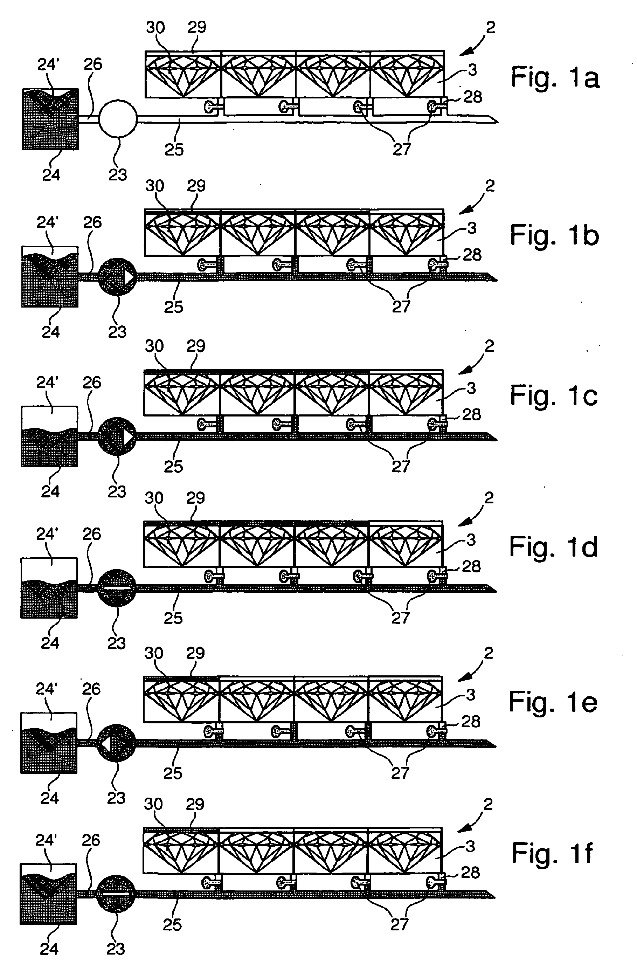

Les figures 1a à 1f illustrent plusieurs vues schématiques de différentes étapes d'affichage d'une partie d'un dispositif d'affichage 2 selon l'invention utilisant un fluide coloré 24', par exemple de couleur noire, pour l'affichage d'une information, par exemple d'une information horaire. Le fluide coloré est choisi de manière à offrir un contraste suffisant pour l'affichage d'une information par rapport à la teinte ou couleur générale du dispositif d'affichage dans le champ de vision du côté de la plaque supérieure du dispositif d'affichage. Des moyens d'alimentation en fluide coloré sont prévus pour véhiculer le fluide coloré dans une position d'affichage d'une information.

De manière générale, le dispositif d'affichage 2 est composé d'au moins une micropompe 23 qui est reliée par un conduit d'entrée 26 à un réservoir 24 de fluide coloré 24', d'un certain nombre de valves ou microvalves 27 reliées à la micropompe 23 par un conduit de sortie commun 25, et de plusieurs cavités ou cellules 29 réalisées au moins en partie dans une première plaque solide transparente ou partiellement transparente. La micropompe et les microvalves font partie des moyens d'alimentation en fluide coloré. Les cavités fermées sont reliées chacune par un canal correspondant 28 à une microvalve respective 27. Le dispositif d'affichage 2 peut également comprendre une plaque intermédiaire ou un support transparent ou semi transparent dans lequel sont placées des pierres transparentes ou semi transparentes. Ces pierres peuvent être des pierres précieuses 30, telles que des diamants taillés, ou des pierres synthétiques, telles que des pierres en oxyde de zirconium cubique monocristallin.

Dans la configuration simplifiée présentée aux figures 1a à 1f, la structure 3 à pierres précieuses 30 est disposée juste en dessous de chaque cavité 29 susceptible de recevoir le fluide coloré 24'. De plus par mesure de simplification, chaque canal 28 n'est représenté que par un trait entre chaque pierre pour relier à travers la structure 3 chaque microvalve à la cavité correspondante 29. Il est à noter également qu'une ou plusieurs pierres peuvent être placées dans chaque cavité plutôt que sur un support particulier afin d'être enrobées par le fluide coloré lorsque la cavité correspondante est remplie dudit fluide.

La micropompe 23 et les microvalves 27 sont commandées par des moyens de commande non représentés. De préférence, des signaux électriques sont fournis par les moyens de commande afin d'activer la micropompe 23, par exemple du type bidirectionnel, et commander chaque microvalve 27. De préférence, chaque microvalve reste fermée à l'état de repos, c'est-à-dire sans réception de signaux électriques de la part des moyens de commande par économie d'énergie électrique.

A la figure 1a, le dispositif d'affichage 2 est dans une position de repos dans laquelle toutes les microvalves et la micropompe ne sont pas activées par des signaux électriques. Le fluide coloré 24' reste donc dans le réservoir 24 de stockage. Comme chaque cavité 29 n'est pas remplie par le fluide coloré, les pierres précieuses 30 de la structure 3 sont donc visibles dans le champ de vision du dispositif d'affichage afin de réfléchir ou réfracter la lumière du jour à travers lesdites pierres. Dans cet état si la couleur du dispositif d'affichage autour des cavités 29 est sensiblement la même que la couleur vue à travers l'ensemble des cavités non remplies du fluide coloré, aucune information n'est présentée aux yeux d'un utilisateur du dispositif d'affichage.

Aux figures 1b et 1c, la micropompe 23 est activée pour véhiculer du fluide coloré 24' provenant du réservoir 24 par le conduit d'entrée 26 à travers le conduit de sortie 25. Comme montré sous forme d'exemple non limitatif, les trois premières microvalves 27 vues depuis la gauche sont commandées pour être ouvertes, alors que la quatrième microvalve reste fermée. Le fluide coloré 24' est donc poussé à travers chaque canal 28 reliant les microvalves 27 ouvertes. Les trois premières cavités ou cellules 29 sont progressivement remplies du fluide coloré 24' transmis par l'activation de la micropompe. Dans l'état de la figure 1c, les pierres précieuses 30 se trouvant en dessous des cavités remplies du fluide coloré ne sont plus visibles dans le champ de vision du dispositif d'affichage. Une information peut ainsi être affichée sur le dispositif d'affichage du type à contraste positif grâce au fluide coloré ayant rempli certaines cavités. Pour un dispositif à contraste négatif, l'information est affichée par des cavités vidées du fluide coloré.

Une fois que les cavités sélectionnées 29 ont été remplies par le fluide coloré, la micropompe 23 et toutes les microvalves 27 ne sont plus activées par les moyens de commande. Ceci a pour conséquence que toutes les microvalves sont fermées tout en maintenant le fluide coloré dans les cavités sélectionnées 29 en fonction de l'information à présenter.

Lors d'un changement d'une information présentée sur le dispositif d'affichage 2, la micropompe 23 peut être activée par les moyens de commande en sens inverse, c'est-à-dire pour aspirer le fluide coloré 24' de certaines cavités 29 pour le stocker dans le réservoir 24. Comme montré sous forme d'exemple non limitatif à la figure 1e, uniquement les deuxième et troisième microvalves 27 sont activées par les moyens de commande pour être ouvertes. De ce fait, le fluide coloré 24' des deuxième et troisième cavités est aspiré par la micropompe 23. Ainsi, uniquement la première pierre précieuse 30 n'est pas visible dans le champ de vision du dispositif d'affichage.

Finalement à la figure 1f, une fois que le fluide coloré 24' a été aspiré des cavités ou cellules sélectionnées 29, la micropompe 23 et toutes les microvalves 27 ne sont plus activées. Ainsi comme pour la figure 1d, les microvalves sont fermées. On comprend donc qu'à la différence d'un dispositif d'affichage à cristaux liquides, il n'est pas nécessaire d'alimenter continuellement en électricité le dispositif d'affichage pour présenter une information déterminée. De ce fait, comme le dispositif d'affichage 2 équipe un instrument portable, tel qu'une montre-bracelet alimentée par une batterie ou un accumulateur de petite taille, une réduction de consommation électrique peut ainsi être constatée par rapport aux dispositifs d'affichage de l'art antérieur.

Il peut être envisagé d'utiliser une première micropompe pour véhiculer le fluide coloré du réservoir vers les cavités sélectionnées, et une seconde micropompe pour aspirer le fluide coloré de certaines cavités remplies dudit fluide. Il peut être prévu également des moyens pour permettre à de l'air de sortir ou entrer dans chaque cavité, quand ladite cavité est remplie ou vidée du fluide coloré. De plus, en lieu et place des microvalves, il peut être envisagé de relier chaque canal 28 à une micropompe spécifique dont le conduit d'entrée de chaque micropompe est relié directement et de manière commune au réservoir 24 de fluide coloré 24'.

Une micropompe 23 peut être réalisée selon un principe équivalent à celui de la micropompe décrite notamment dans le brevet CH 679 555, qui explicite le fonctionnement d'une telle micropompe. Généralement, une telle micropompe est constituée d'une chambre de pompage, d'un canal d'entrée et d'un canal de sortie. Le canal d'entrée communique avec la chambre de pompage par l'intermédiaire d'un premier clapet d'aspiration, alors que le canal de sortie communique avec la chambre de pompage par l'intermédiaire d'un second clapet dit de refoulement. Tous ces éléments sont réalisés traditionnellement par gravure d'une plaquette de silicium, qui est enfermée par la suite entre deux plaquettes de verre. A travers au moins une des plaquettes en verre, les canaux d'entrée et de sortie de la micropompe sont réalisés. Grâce à l'opération de gravure de la plaquette en silicium, une partie suffisamment amincie de la plaquette constitue une membrane susceptible de bouger en fonction d'une différence de pression notamment dans la chambre de pompage. Pour l'activation de la micropompe, il est utilisé de préférence une pastille piézo-électrique positionnée sur une paroi déformable d'une des plaquettes en verre en regard de la chambre de pompage.

D'autres types de micropompe peuvent être utilisés pour remplir la même fonction pour le dispositif d'affichage selon l'invention. Pour ce faire, le lecteur peut se référer à certains autres types de micropompes, comme décrit sous les sites "www.ahd.tudelft.nl/~peterv/presentations/micropumps.pdf" ou "www.pro-4-pro.com/en/Micro/Company-4400149/42b6c62ca6815.html".

L'ensemble des microvalves 27 du dispositif d'affichage 2 peut être réalisé également sur la base d'une gravure d'une plaquette de silicium fixée sur une plaquette en verre selon un principe équivalent à celui décrit dans la demande de brevet EP 0 310 605. Chaque clapet de fermeture par microvalve est réalisé pour obstruer le passage par contact direct sur la plaquette de verre entre un canal d'entrée et un canal de sortie 28 de la microvalve en position de repos. Une couche piézo-électrique par microvalve peut être placée soit sur la plaquette en silicium soit sur une portion déformable de la plaquette en verre en face du clapet de fermeture. Lorsque la couche piézo-électrique de la microvalve correspondante est activée par des signaux électriques, la microvalve est ouverte. La ou les micropompes peuvent aussi être réalisées avec les microvalves dans un même ensemble de plaquettes pour former un seul composant.

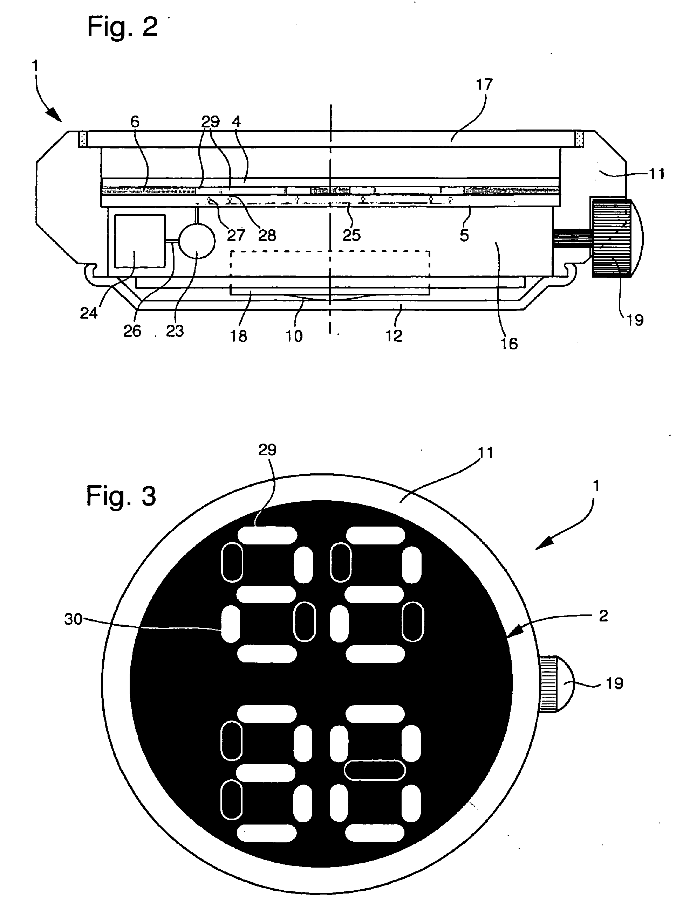

En référence aux figures 2 et 3, on observe une première forme d'exécution d'un dispositif d'affichage 2 selon l'invention dans une montre 1. Une plaque supérieure du dispositif d'affichage définit une partie supérieure d'un cadran de montre. Cette montre 1 comprend classiquement une boîte 11 munie d'un fond 12 dans laquelle sont disposés un mouvement d'horlogerie électronique 16 avec un circuit garde-temps électronique associé et une pile 18 qui prend appui sur le fond 12 par l'intermédiaire d'un ressort de contact 10. La boîte 11 est également fermée de façon classique par une glace 17 recouvrant la totalité du cadran, et un bouton couronne ou bouton poussoir 19 de la boîte permet de régler notamment l'heure de la montre ou la date.

Dans cette forme d'exécution, l'affichage de l'heure ou de la date est présenté sous forme numérique. Chaque cavité 29 susceptible d'être remplie par le fluide coloré représente un des sept segments d'un des quatre digits représentant les chiffres de l'heure ou de la date à afficher sur le dispositif d'affichage 2. Chaque cavité 29 est réalisée classiquement par une gravure traversante ou usinage de certaines parties d'une plaque intermédiaire 6, par exemple en verre ou en plastique, qui est enfermée par la suite entre un élément inférieur sous forme d'une plaque inférieure 5 et une plaque supérieure 4 préférentiellement en verre constituant le cadran de la montre. Bien entendu, la plaque supérieure 4 et la plaque intermédiaire gravée 6 peuvent être formée d'une seule plaque dans laquelle des portions de cavités 29 sont gravées ou usinées classiquement avant de fixer cette plaque sur l'élément inférieur pour fermer les cavités.

Chaque cavité n'est donc reliée que par un canal correspondant 28 d'alimentation en fluide coloré réalisé dans l'élément inférieur 5. Chaque canal 28 est relié à une sortie d'une microvalve spécifique 27, qui est commandée par des signaux électriques fournis par des moyens de commande non représentés, mais cadencés par une base de temps du circuit garde-temps du mouvement d'horlogerie 16. Un conduit de sortie commun 25 relie chaque entrée des microvalves afin d'être relié à une sortie de la micropompe 23, dont l'entrée est reliée par un conduit d'entrée 26 à un réservoir 24 de fluide coloré. La micropompe 23 est également commandée par des signaux électriques fournis par les moyens de commande cadencés par la base de temps. Tous les composants décrits ci-devant, qui sont illustrés de manière symbolique à la figure 2, peuvent être réalisés dans un même élément ou substrat inférieur excepté le réservoir 24 de fluide coloré.

L'épaisseur de la plaque intermédiaire peut être comprise entre 100 et 300 µm, par exemple de l'ordre de 150 µm, ce qui définit la hauteur de chaque cavité. La largeur de chaque canal d'alimentation 28 peut être comprise entre 10 et 50 µm, par exemple de l'ordre de 30 µm de manière à laisser passer un fluide coloré peu visqueux. L'élément inférieur 5 peut être réalisé avec une épaisseur comprise entre 0.5 à 1.5 mm.

Comme représenté aux figures 2 et 3, la plaque intermédiaire 6 autour des cavités est teintée de la même couleur, par exemple noire, que le fluide coloré pour un affichage à contraste négatif, alors que la plaque supérieure en verre ou en plastique 4 est entièrement transparente. Pour que le dispositif d'affichage dans ce cas ne présente aucune information, chaque cavité 29 doit être remplie par le fluide coloré. Pour visionner une information de l'heure ou de la date, un certain nombre de cavités sont vidées du fluide coloré. De cette façon, chaque segment des digits des chiffres à afficher apparaît dans le champ de vision du dispositif d'affichage d'une autre couleur, par exemple de la couleur de l'élément inférieur 5 en blanc ou de couleur argentée.

Bien entendu, il peut être envisagé d'utiliser un affichage d'une information à contraste positif sur le dispositif d'affichage 2 non représenté à la figure 3. Dans ce cas, la plaque intermédiaire 6, ainsi que la plaque supérieure 4 sont de préférence transparentes, alors que la surface supérieure de l'élément inférieur 5 présente une couleur blanche ou argentée dans le champ de vision du dispositif d'affichage 2. Chaque cavité est vidée du fluide coloré à l'état de repos sans affichage d'une information par le dispositif d'affichage. Pour l'affichage d'une information, certaines cavités 29 peuvent être par contre remplies dudit fluide coloré en commandant la micropompe et les microvalves respectives à l'aide des signaux électriques fournis par les moyens de commande.

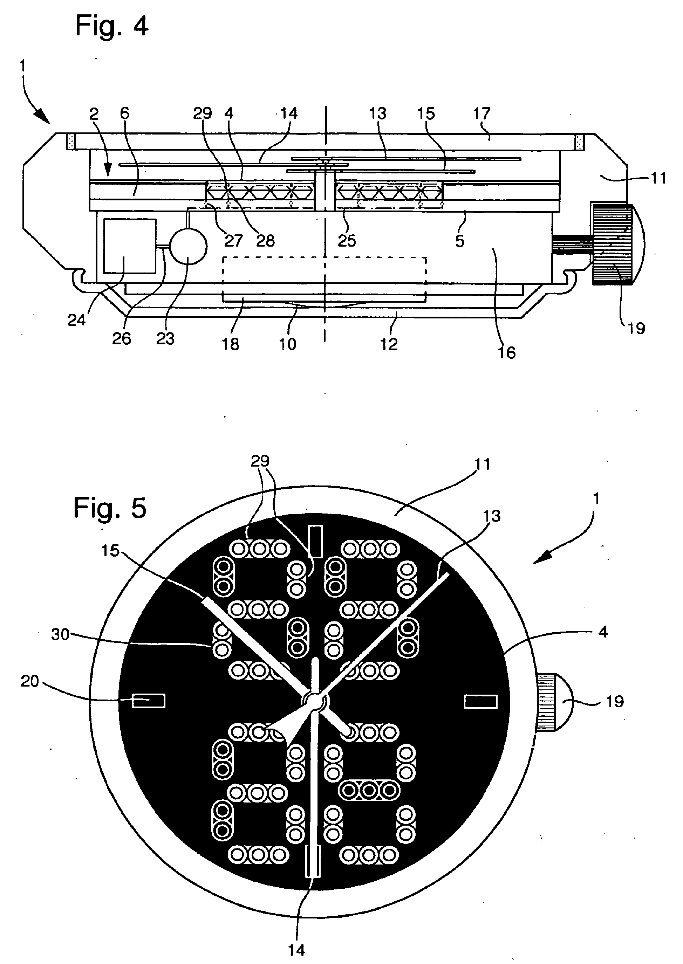

En référence aux figures 4 et 5, on observe une seconde forme d'exécution d'un dispositif d'affichage 2 selon l'invention équipant une montre 1. Comme précédemment, une plaque supérieure transparente 4, par exemple en verre, du dispositif d'affichage 2 définit une partie supérieure d'un cadran de montre. Il est à noter que tous les composants de la montre 1, qui comprend le dispositif d'affichage 2 selon l'invention décrits ci-après portent des signes de référence identiques à ceux présentés aux figures 2 et 3. Par simplification, il ne sera ainsi pas répété la description de chacun de ces composants pour les figures 4 et 5.

La montre dans cette seconde forme d'exécution est susceptible de fournir une indication horaire à l'aide d'une aiguille des secondes 13, d'une aiguille des minutes 14 et d'une aiguille des heures 15. Ces aiguilles sont entraînées par un dispositif d'entraînement (non représenté). Ces aiguilles se déplacent au-dessus d'un cadran constitué en partie par la plaque supérieure 4 du dispositif d'affichage 2, qui porte des heures index 20 visibles sur la figure 5. Pour ce faire, l'axe des aiguilles passe à travers une ouverture 9 pratiquée au centre du dispositif d'affichage 2 afin d'être entraînée par le dispositif d'entraînement du mouvement d'horlogerie 16.

La plaque intermédiaire 6 de préférence en plastique transparent ou semi transparent du dispositif d'affichage 2 comprend plusieurs pierres transparentes ou semi transparentes 30 maintenues dans la matière de la plaque. Ces pierres, qui sont de préférence des pierres précieuses, sont disposées sous chaque segment des digits constitués par les cavités 29. La dimension des segments et des pierres précieuses est choisie de manière à voir au moins une pierre précieuse, de préférence au moins deux pierres précieuses, par segment transparent, c'est-à-dire quand la cavité correspondante est vidée du fluide coloré. Dans ce cas de figure, il est possible d'observer entièrement 2 ou 3 pierres précieuses ou plus à travers certains segments transparents comme montré par l'indication horaire 22h30 de la figure 5.

La largeur adéquate de chaque pierre précieuse peut être choisie inférieure à 1 mm, par exemple de l'ordre de 0.8 mm (0.01 carat) en fonction de la largeur choisie d'un segment de digit. L'espace séparant chaque pierre précieuse est inférieur à la largeur des pierres, notamment inférieur à 0.5 mm, par exemple 0.15 mm. Bien entendu, il est envisageable de munir la plaque intermédiaire 6 de pierres précieuses de taille supérieure à 1 mm, par exemple de l'ordre de 1.5 mm ou supérieure.

Plusieurs sortes de pierres de couleur différente peuvent être intégrées dans la plaque intermédiaire 6. Les pierres précieuses 30 peuvent être des rubis, des saphirs, des émeraudes, des pierres de lune, des diamants, ou d'autres pierres précieuses. Chaque pierre peut être taillée en deux parties sensiblement tronconiques depuis une zone intermédiaire la plus large, ou posséder plusieurs facettes taillées. La dimension des pierres disposées dans la plaque intermédiaire peut être différente. Des pierres de couleur ou de taille différentes peuvent être sélectionnées pour chaque digit de l'information à afficher par le dispositif d'affichage 2. La taille des pierres peut être choisie parmi des types, tels que brillant, baguette ou autres types à multiples facettes pour donner un éclat lumineux aux pierres visibles.

Les cavités 29 constituant chaque segment des digits sont gravées dans la plaque intermédiaire en plastique jusqu'à fleur de la facette supérieure de chaque pierre précieuse 30. Une plaque supérieure 4 transparente en verre ou également en plastique est fixée sur la plaque intermédiaire gravée ou usinée afin de fermer chaque cavité. Chaque canal 28 d'alimentation en fluide coloré est réalisé à travers la plaque intermédiaire pour relier chaque cavité 29 à une microvalve 27 respective. Dans le cas d'un affichage à contraste négatif comme représenté à la figure 5, la plaque intermédiaire 6 peut être teintée d'une couleur, par exemple noire, identique au fluide coloré tout autour des cavités 29.

Il peut être envisageable qu'une ou plusieurs pierres soient disposées à l'intérieur de chaque cavité 29, plutôt que d'être intégrées dans la matière de la plaque intermédiaire 6. Dans ce cas, le fluide coloré enrobe chaque pierre précieuse dans le cas où la cavité est remplie par ledit fluide.

Grâce aux pierres précieuses 30 disposées sous les cavités par rapport au champ de vision du dispositif d'affichage, une amélioration de la vision de l'information affichée est obtenue par réflexion ou réfraction de la lumière du jour à travers lesdites pierres visibles. Pour ce faire, l'indice de réfraction de la matière de la plaque intermédiaire doit être différent de celui des pierres précieuses. Des effets de couleurs peuvent également apparaître par diffraction de la lumière du jour à travers les pierres précieuses visibles, ce qui peut améliorer la vision de l'information tout en apportant un effet esthétique à la montre.

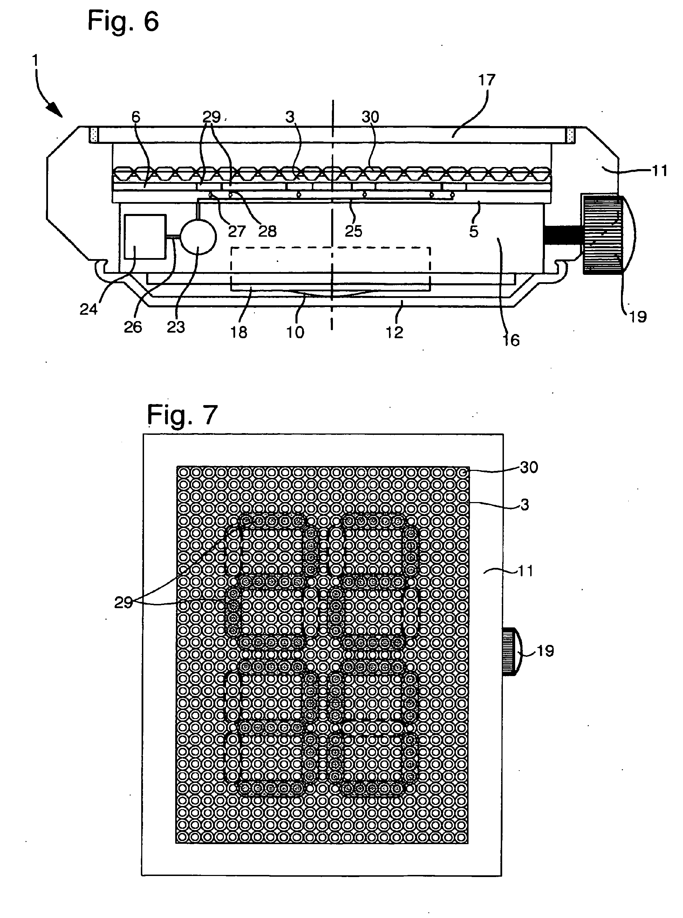

En référence aux figures 6 et 7, une troisième forme d'exécution d'un dispositif d'affichage 2 selon l'invention équipant une montre 1 à affichage numérique de l'heure est représentée. La boîte 11 de montre est de forme rectangulaire en vue de dessus. Il est à noter que tous les composants de la montre 1, qui comprend le dispositif d'affichage 2 selon l'invention décrits ci-après portent des signes de référence identiques à ceux présentés aux figures 2 à 5. Par simplification, il ne sera ainsi pas répété la description de chacun de ces composants pour les figures 6 et 7.

La différence essentielle de cette troisième forme d'exécution par rapport à la première forme d'exécution est qu'en lieu et place de la plaque supérieure pour fermer chaque cavité 29 obtenue par gravure ou usinage de la plaque intermédiaire 6, il est utilisé un support 3 de pierres précieuses. Ce support transparent ou semi transparent 3 forme une grille maintenant plusieurs pierres précieuses transparentes ou semi transparentes 30 de couleur identique ou différente. Dans ce cas de figure, les pierres précieuses rapprochées l'une de l'autre peuvent couvrir l'intégralité de la portion du support directement visible dans le champ de vision du dispositif d'affichage 2.

La plaque intermédiaire est de préférence transparente de manière à permettre un affichage de l'information par contraste positif en remplissant les cavités sélectionnées par le fluide coloré. Il peut être prévu également dans cette forme d'exécution, un dispositif de rétro-éclairage constitué de préférence d'une feuille électroluminescente placée sur la surface supérieure de l'élément inférieur 5 en forme de plaque. Ce dispositif de rétro-éclairage permet dans l'obscurité de visionner les informations du dispositif d'affichage tout en traversant les pierres précieuses 30 visibles du support 3.

Il peut être envisagé également d'utiliser un dispositif d'éclairage frontal placé au-dessus de la plaque supérieure et/ou du support 3 de pierres précieuses transparentes ou semi transparentes 30. Ce dispositif d'éclairage frontal peut être composé par exemple d'une diode électroluminescente classique (LED) ou organique (OLED) disposée à proximité de la boîte 11 de montre.

A partir de la description qui vient d'être faite de multiples variantes de réalisation du dispositif d'affichage peuvent être conçues par l'homme du métier sans sortir du cadre de l'invention définie par les revendications. Les plaques, constituant la partie principale du dispositif d'affichage, peuvent être courbées sous la forme d'une portion de cylindre afin d'équiper une montre dont le boîtier est également courbé. L'information affichée par l'ensemble d'affichage peut être du type alphanumérique, voire une image ou un motif. Le réservoir de fluide coloré peut être relié par un passage isolé à travers la boîte de la montre pour permettre de le remplir de fluide coloré ou de changer de type de fluide coloré, par exemple d'une couleur différente. Il peut être prévu deux réservoirs pour deux fluides colorés d'une couleur différente, deux micropompes reliées chacune à un réservoir respectif, pour permettre de remplir chaque cavité par l'un ou l'autre des fluides colorés par un premier canal relié à une micropompe ou par un second canal relié à l'autre micropompe. Il peut être prévu un composant comprenant deux micropompes à fonctionnement inverse, de manière à définir un composant à micropompe de type bidirectionnel.

## Revendications

1. Dispositif d'affichage (2) pour un instrument portable, tel qu'une montre (1), le dispositif comprenant au moins une première plaque transparente ou semi transparente (3, 4, 6) disposée sur un élément inférieur (5), plusieurs cavités fermées (29) étant formées au moins en partie dans la première plaque dans le champ de vision du dispositif pour l'affichage d'une information à travers la plaque, chaque cavité (29) étant reliée par un canal respectif (28, 25) à travers l'élément inférieur (5) à un réservoir (24) de fluide coloré (24') par l'intermédiaire de moyens d'alimentation (23, 27) permettant de remplir ou vider chaque cavité fermée du fluide coloré pour l'affichage d'une information, les moyens d'alimentation comprenant au moins une micropompe (23) reliée au réservoir à fluide coloré, **caractérisé en ce que** les moyens d'alimentation en fluide coloré comprennent pour l'alimentation en fluide coloré de chaque cavité une microvalve (27) directement reliée au canal respectif de la cavité fermée (29) à remplir ou vider du fluide coloré, chaque microvalve étant reliée par un conduit de sortie commun (25) à une micropompe, qui est reliée directement par un conduit d'entrée (26) au réservoir (24) de fluide coloré (24').

2. Dispositif d'affichage (2) selon la revendication 1, **caractérisé en ce que** les canaux respectifs des cavités fermées (29) passent à travers l'élément inférieur, qui est opaque pour être reliés au réservoir de fluide coloré par l'intermédiaire des moyens d'alimentation en fluide coloré.

3. Dispositif d'affichage (2) selon la revendication 1, **caractérisé en ce que** la micropompe (23) et les microvalves (27) sont commandées par des signaux électriques fournis par des moyens de commande, les microvalves étant fermées dans une position de repos sans signaux de commande fournis par les moyens de commande pour maintenir le fluide coloré dans les cavités sélectionnées en fonction de l'information à présenter.

4. Dispositif d'affichage (2) selon la revendication 3, pour une montre (1) en tant qu'instrument portable, la montre comprenant un mouvement d'horlogerie électronique (16) à circuit garde-temps, **caractérisé ce que** les microvalves (27) disposées dans l'élément inférieur (5) et la micropompe (23) sont activées par des signaux électriques fournis par les moyens de commande, qui sont cadencés par une base de temps du circuit garde-temps de manière à sélectionner certaines cavités fermées à remplir ou vider du fluide coloré pour afficher une heure ou une date, lesdites cavités fermées étant configurées en digits formés chacun de segments d'affichage.

5. Dispositif d'affichage (2) selon l'une des revendications précédentes, **caractérisé en ce que** la première plaque est constituée d'une plaque supérieure (4) fixée sur une plaque intermédiaire (6), qui est disposée sur l'élément inférieur (5), chaque cavité fermée (29) étant formée au moins en partie dans la plaque intermédiaire.

6. Dispositif d'affichage (2) selon la revendication 5, **caractérisé en ce que** chaque cavité (29) formée dans la plaque intermédiaire (6) depuis une surface inférieure de la plaque supérieure est fermée par la surface supérieure de l'élément inférieur.

7. Dispositif d'affichage (2) selon la revendication 5, **caractérisé en ce qu'**il comprend un ensemble de pierres transparentes ou semi transparentes (30), qui sont maintenues dans la matière de la plaque intermédiaire (6) pour combiner l'information affichée avec la réfraction de lumière au travers des pierres visibles et/ou la réflexion sur ou dans lesdites pierres, et **en ce que** chaque cavité fermée (29) est formée dans la plaque intermédiaire entre une facette supérieure de chaque pierre et une surface inférieure de la plaque supérieure (4), le canal (28) d'alimentation en fluide coloré de chaque cavité traversant la plaque intermédiaire et passant par l'élément inférieur pour être relié par l'intermédiaire des moyens d'alimentation (23, 27) au réservoir (24) de fluide coloré.

8. Dispositif d'affichage (2) selon la revendication 7, **caractérisé en ce que** les pierres sont des pierres précieuses (30) qui sont agencées dans la matière de la plaque intermédiaire (6) sous forme de digits en regard des cavités (29) configurées en digits, et **en ce que** la forme et la dimension de chaque segment constitué par chaque cavité fermée sont choisies de manière à apercevoir entièrement ou partiellement au moins deux pierres par cavité non remplie du fluide coloré.

9. Dispositif d'affichage (2) selon l'une des revendications 1 à 4, **caractérisé en ce que** la première plaque est constituée d'un support transparent ou semi transparent (3) fixé sur une plaque intermédiaire (6) qui est disposée sur l'élément inférieur (5), chaque cavité fermée (29) étant formée au moins en partie dans la plaque intermédiaire, et **en ce que** le support forme une grille maintenant plusieurs pierres précieuses transparentes ou semi transparentes (30) proches l'une de l'autre pour couvrir la portion du support directement visible dans le champ de vision du dispositif d'affichage.

10. Montre (1) comprenant dans une boîte (11) fermée par un verre (17) un dispositif d'affichage (2) selon l'une des revendications précédentes, **caractérisé en ce que** les moyens d'alimentation en fluide coloré du dispositif d'affichage (2) comprennent au moins une micropompe (23) reliée à un réservoir (24) de fluide coloré (24') et plusieurs microvalves (27) reliées par un conduit de sortie commun (25) à la micropompe, chaque microvalve étant reliée à une cavité respective (29) par un canal (28) à travers l'élément inférieur (5), et **en ce que** la micropompe et les microvalves sont commandées par des signaux électriques fournis par des moyens de commande cadencés par une base de temps du mouvement d'horlogerie (16) afin que certaines cavités sélectionnées soient remplies ou vidées du fluide coloré pour un affichage d'une information, telle qu'une heure ou une date.

11. Montre (1) selon la revendication 10, **caractérisée en ce qu'**une partie du dispositif d'affichage (2) constitue le cadran de la montre, et **en ce que** des aiguilles d'indication de l'heure (13, 14, 15), qui sont entraînées par un dispositif d'entraînement d'un mouvement horloger (16), traversent l'élément inférieur (5) et la première plaque transparente ou semi transparente (3, 4, 6) pour l'indication de l'heure.

12. Montre (1) selon la revendication 10, **caractérisée en ce que** lesdites cavités fermées sont configurées en digits formés chacun de segments d'affichage, et **en ce que** la micropompe (23) et les microvalves (27) sont commandées par des signaux électriques fournis par des moyens de commande, les microvalves étant fermées dans une position de repos sans signaux de commande fournis par les moyens de commande pour maintenir le fluide coloré dans les cavités sélectionnées en fonction de l'information à présenter.

13. Montre (1) selon la revendication 10, **caractérisée en ce que** le réservoir de fluide coloré peut être relié par un passage isolé à travers la boîte de la montre pour permettre de le remplir de fluide coloré ou de changer de type de fluide coloré.

## Claims

1. Display device (2) for a portable instrument, such as a watch (1), the device including at least a first transparent or semi-transparent plate (3, 4, 6) arranged on a bottom element (5), several cavities (29) being formed at least in part in the first plate in the field of view of the device to display information through the plate, each cavity (29) being connected by a respective channel (28, 25) through the bottom element (5) to a tank (24) of coloured fluid (24') via feed means (23, 27) for filling or emptying each closed cavity of coloured fluid for the display of information, the feed means including at least one micropump (23) connected to the coloured fluid tank, **characterized in that** the coloured fluid feed means include, for feeding each cavity with coloured fluid, a microvalve (27) directly connected to the respective channel of the closed cavity (29) to be filled with or emptied of coloured fluid, each microvalve being connected by a common outlet pipe (25) to a micropump, which is directly connected by an inlet pipe (26) to the tank (24) of coloured fluid (24').

2. Display device (2) according to claim 1, **characterized in that** the respective channels of the closed cavities (29) pass through the bottom element, which is opaque, to be connected to the coloured fluid tank via the coloured fluid feed means.

3. Display device (2) according to claim 1, **characterized in that** the micropump (23) and the microvalves (27) are controlled by electric signals supplied by control means, the microvalves being closed in a rest position without any control signals being supplied by the control means to keep the coloured fluid in the selected cavities as a function of the information to be presented.

4. Display device (2) according to claim 3 for a watch (1) as portable instrument, the watch including an electronic watch movement (16) with a time-keeper circuit, **characterized in that** the microvalves (27) arranged in the bottom element (5) and the micropump (23) are activated by electric signals supplied by the control means, which are clocked by a time base of the time-keeper circuit so as to select certain closed cavities to be filled with or emptied of coloured fluid in order to display a time or date, said closed cavities being configured in digits each formed of display segments.

5. Display device (2) according to any one of the preceding claims, **characterized in that** the first plate is formed of a top plate (4) fixed to an intermediate plate (6), which is arranged on the bottom element (5), each closed cavity (29) being formed at least in part in the intermediate plate.

6. Display device (2) according to claim 5, **characterized in that** each cavity (29) formed in the intermediate plate (6) from a bottom surface of the top plate is closed by the top surface of the bottom element.

7. Display device (2) according to claim 5, **characterized in that** it includes a set of transparent or semi-transparent stones (30), which are held in the material of the intermediate plate (6) to combine the information displayed with the refraction of light through the visible stones and/or the reflection onto or in said stones, and **in that** each closed cavity (29) is formed in the intermediate plate between a top facet of each stone and a bottom surface of the top plate (4), the coloured fluid feed channel (28) of each cavity passing through the intermediate plate and passing through the bottom element to be connected via the feed means (23, 27) to the coloured fluid tank (24).

8. Display device (2) according to claim 7, **characterized in that** the stones are precious stones (30) which are arranged in the material of the intermediate plate (6) in the form of digits opposite the cavities (29) configured in digits, and **in that** the shape and dimension of each segment formed by each closed cavity are selected so that the entirety or a part of at least two stones per cavity not filled with coloured fluid is perceived.

9. Display device (2) according to any one of claims 1 to 4, **characterized in that** the first plate is formed of a transparent or semi-transparent support (3) secured to an intermediate plate (6), which is arranged on the bottom element (5), each closed cavity (29) being formed at least in part in the intermediate plate, and **in that** the support forms a grid holding several precious transparent or semi-transparent stones (30) close to each other to cover the portion of the support that is directly visible in the field of view of the display device.

10. Watch (1) including in a case (11) closed by a crystal (17) a display device (2) according to any one of the preceding claims, **characterized in that** the coloured fluid feed means of the display device (2) include at least one micropump (23) connected to a tank (24) of coloured fluid (24') and several microvalves (27) connected via a common outlet pipe (25) to the micropump, each microvalve being connected to a respective cavity (29) via a channel (28) through the bottom element (5), and **in that** the micropump and the microvalves are controlled by electric signals supplied by control means clocked by a time base of the watch movement (16) so that certain selected cavities are filled with or emptied of the coloured fluid for displaying information, such as a time or a date.

11. Watch (1) according to claim 10, **characterized in that** one part of the display device (2) forms the watch dial, and **in that** time indicating hands (13, 14, 15) , which are driven by a drive device of a watch movement (16), pass through the bottom element (5) and the first transparent or semi-transparent plate (3, 4, 6) to indicate the time.

12. Watch (1) according to claim 10, **characterized in that** said closed cavities are configured in digits each formed of display segments, and **in that** the micropump (23) and the microvalves (27) are controlled by electric signals supplied by control means, the microvalves being closed in a rest position without any control signals being supplied by the control means to hold the coloured fluid in the selected cavities as a function of the information to be presented.

13. Watch (1) according to claim 10, **characterized in that** the coloured fluid tank may be connected by an isolated passage through the watchcase so as to be filled with coloured fluid or to allow the type of coloured fluid to be changed.

## Patentansprüche

1. Anzeigeeinrichtung (2) für ein portables Instrument, wie z. B. eine Uhr (1), wobei das Instrument zumindest eine erste transparente oder semitransparente Platte (3, 4, 6) aufweist, die auf einem unteren Element (5) angeordnet ist, mehrere geschlossene Kavitäten (29) aufweist, die zumindest teilweise in der ersten Platte in einem Sichtfeld der Einrichtung zum Anzeigen einer Information durch die Platte hindurch ausgebildet sind, wobei jede Kavität (29) mittels eines entsprechenden Kanals (28, 25) durch das untere Element (5) hindurch mit einem colorierten Fluid (24') versehenen Reservoir (24) verbunden ist, wobei Versorgungsmittel (23, 27) vorgesehen sind, mittels derer jede geschlossene Kavität mit einem colorierten Fluid befüllt oder geleert werden kann, um eine Information anzeigen zu können, wobei die Versorgungsmittel zumindest eine Mikropumpe (23) aufweisen, die mit dem Reservoir für das colorierte Fluid verbunden ist, **dadurch gekennzeichnet, dass** die colorierten Fluid-Versorgungsmittel zur Versorgung jeder Kavität mit coloriertem Fluid ein Mikroventil (27) aufweisen, welches direkt mit dem entsprechenden Kanal der geschlossenen Kavität (29) verbunden ist, um das colorierte Fluid zu entleeren oder zu befüllen, wobei jedes Mikroventil über einen gemeinsamen Auslass (25) mit einer Mikropumpe verbunden ist, die direkt über einen Einlass (26) mit dem Reservoir (24) des colorierten Fluids (24') verbunden ist.

2. Anzeigeeinrichtung (2) nach Anspruch 1, **dadurch gekennzeichnet, dass** die den geschlossenen Kavitäten (29) entsprechenden Kanäle durch das untere Element hindurch verlaufen, welches opak ist, um mittels der colorierten Fluid-Versorgungsmittel mit dem Reservoir des colorierten Fluids verbunden zu werden.

3. Anzeigeeinrichtung (2) nach Anspruch 1, **dadurch gekennzeichnet, dass** die Mikropumpe (23) und die Mikroventile (27) von elektrischen Signalen gesteuert werden, die von Steuermitteln erzeugt werden, wobei die Mikroventile bei Ausbleiben von Steuersignalen, die von den Steuermitteln erzeugt werden, in einer Ruheposition geschlossen sind, um das colorierte Fluid in ausgewählten Kavitäten in einer Funktion zur Darstellung von Informationen zu halten.

4. Anzeigeeinrichtung (2) nach Anspruch 3, für eine Uhr (1) als portables Instrument, wobei die Uhr ein elektronisches Uhrwerk (16) mit einer Zeithalteschaltung aufweist, **dadurch gekennzeichnet, dass** die Mikroventile (27) im unteren Element (5) angeordnet sind und dass die Mikropumpe (23) durch elektrische Signale aktiviert wird, welche von den Steuermitteln erzeugt werden, die durch eine Zeitbasis der Zeithalteschaltung derart getaktet werden, dass bestimmte geschlossene Kavitäten zum Entleeren oder Befüllen mit coloriertem Fluid zum Anzeigen einer Zeit oder eines Datums ausgewählt werden, wobei besagte geschlossene Kavitäten als Anzeigesegment zur Bildung von Zahlen geformt sind.

5. Anzeigeeinrichtung (2) nach einem der vorhergehenden Ansprüche, **dadurch gekennzeichnet, dass** die erste Platte aus einer oberen Platte (5), gebildet ist, die auf einer mittleren Platte (6) fixiert ist, welche auf dem unteren Element (5) angeordnet ist, wobei jede geschlossene Kavität (29) zumindest teilweise in der mittleren Platte gebildet ist.

6. Anzeigeeinrichtung (2) nach Anspruch 5, **dadurch gekennzeichnet, dass** jede in der mittleren Platte (6) gebildete Kavität (29) bis an eine Unterseite der oberen Platte heranragt und von der Oberseite des unteren Elements verschlossen ist.

7. Anzeigeeinrichtung (2) nach Anspruch 5, **dadurch gekennzeichnet, dass** sie eine Anzahl an transparenten oder semitransparenten Steinen (30) aufweist, die im Material der mittleren Platte (6) gehalten werden, um mittels Lichtbrechung durch die Steine hindurch sichtbare und/oder durch Reflexion auf oder in besagten Steinen darstellbare Informationen zu kombinieren, und dass jede geschlossene Kavität (29) in der mittleren Platte zwischen einer oberen Facette jedes Steins und einer Unterseite der oberen Platte (4) gebildet ist, wobei der Versorgungskanal (28) für das colorierte Fluid einer jeden Kavität durch die mittlere Platte und entlang dem unteren Element verläuft, um über die Versorgungsmittel (23, 27) mit dem Reservoir (24) des colorierten Fluids verbunden zu werden.

8. Anzeigeeinrichtung (2) nach Anspruch 7, **dadurch gekennzeichnet, dass** die Steine Edelsteine (30) sind, die im Material der mittleren Platte (6) in Zahlenform im Hinblick auf die in Zahlen konfigurierten Kavitäten (29) angeordnet sind, und wobei die Form und die Dimension jedes von einer geschlossenen Kavität gebildeten Segments derart gewählt wird, dass zumindest zwei Steine pro Kavität, die nicht mit coloriertem Fluid gefüllt ist, vollständig oder partiell erkennbar sind.

9. Anzeigeeinrichtung (2) nach einem der Ansprüche 1 bis 4, **dadurch gekennzeichnet, dass** die erste Platte von einer transparenten oder semitransparenten Auflage (3) gebildet wird, welche auf einer mittleren Platte (6) fixiert ist, die auf dem unteren Element (5) angeordnet ist, wobei jede geschlossene Kavität (29) zumindest teilweise in der mittleren Platte gebildet ist, und wobei die Auflage ein Gitter bildet, welches mehrere transparente oder semitransparente Edelsteine (30) nebeneinander einfasst, um einen direkt sichtbaren Bereich im Sichtfeld der Anzeigeeinrichtung zu überdecken.

10. Uhr (1) umfassend ein von einem Glas (17) geschlossenes Gehäuse (11) mit einer Anzeigeeinrichtung (2) nach einem der vorhergehenden Ansprüche, **dadurch gekennzeichnet, dass** die Versorgungsmittel für das colorierte Fluid der Anzeigeeinrichtung (2) zumindest eine Mikropumpe (23) aufweisen, die mit einem Reservoir (24) für ein coloriertes Fluid (24') verbunden ist und mehrere Mikroventile (27) aufweist, die über einen gemeinsamen Ablauf (25) mit der Mikropumpe verbunden sind, wobei jedes Mikroventil mit einer entsprechenden Kavität (29) über einen durch das untere Element (5) hindurch verlaufenden Kanal (25) verbunden ist, und wobei die Mikropumpe und die Mikroventile von elektrischen Signalen gesteuert werden, die von Steuermitteln erzeugt werden, die von einer Zeitbasis eines Uhrwerks (16) getaktet werden, um bestimmte ausgewählte Kavitäten zur Anzeige in Form einer Information, wie einer Uhrzeit oder eines Datums mit dem colorierten Fluid zu befüllen oder zu entleeren.

11. Uhr (1) nach Anspruch 10, **dadurch gekennzeichnet, dass** ein Teil der Anzeigeeinrichtung (2) als Zifferblatt ausgebildet ist, und wobei die Uhrzeitzeiger (13, 14, 15), welche von einer Antriebseinrichtung des Uhrwerks (16) angetrieben werden, das untere Element (5) und die erste transparente oder semi transparente (3, 4, 6) Platte zum Anzeigen der Uhrzeit durchqueren.

12. Uhr (1) nach Anspruch 10, **dadurch gekennzeichnet, dass** besagte geschlossene Kavitäten in Zahlen und in Form von Anzeigesegmenten ausgebildet sind, und wobei die Mikropumpe (23) und die Mikroventile (27) von elektrischen Signalen gesteuert werden, die von Steuermitteln erzeugt werden, wobei die Mikroventile bei Ausbleiben von Steuersignalen, die von den Steuermitteln erzeugt werden, in einer Ruheposition geschlossen sind, um das colorierte Fluid in ausgewählten Kavitäten in einer Funktion zur Darstellung von Informationen zu halten.

13. Uhr (1) nach Anspruch 10, **dadurch gekennzeichnet, dass** das Reservoir des colorierten Fluids über eine isolierte Leitung durch das Gehäuse der Uhr geführt werden kann, um ein Befüllen des colorierten Fluids oder ein Austauschen des Typs des colorierten Fluids zu ermöglichen.
